# EUROPEAN PATENT APPLICATION

(11) **EP 4 775 855 A1**
(43) Date of publication of application: **15.07.2026**
(21) Application number: 24862640.0
(22) Date of filing: 26.08.2024
(51) Int. Cl.: F16J 15/34, F16C 17/04

(54) **SLIDING COMPONENT**

(30) Priority: 05.09.2023 JP 2023143434
(71) Applicant: Eagle Industry Co., Ltd., Minato-ku Tokyo 105-8587 (JP)
(72) Inventor: ONUMA Minori, Tokyo 105-8587 (JP); MAKISHIMA So, Tokyo 105-8587 (JP); NEGISHI Yuta, Tokyo 105-8587 (JP)
(74) Representative: WSL Patentanwälte Partnerschaft mbB
(86) International application number: PCT/JP2024/030262
(87) International publication number: WO 2025/052988

(57) **Abstract**

There is provided a sliding component that can reliably introduce a fluid into a dynamic pressure generating groove. There is provided a sliding component formed by a pair of sliding rings 10 and 20 having sliding surfaces 11 and 12 which are rotated relative to each other and which defines a radially outer space S1 and a radially inner space S2. At least one sliding surface 11 is provided with a dynamic pressure generating groove 12 that extends in a circumferential direction, and a deep groove 14 which extends in the circumferential direction and of which a circumferential end portion 14a on a relative rotation downstream side communicates with a relative rotation upstream end portion 12b of the dynamic pressure generating grooves 12.

## Description

### {TECHNICAL FIELD}

The present invention relates to a sliding component, for example, a sliding component used for a shaft seal and a bearing.

### {BACKGROUND ART}

For example, a mechanical seal that includes a pair of annular sliding rings rotating relative to each other and having sliding surfaces sliding against each other is known as as a sliding component for preventing the leakage of a fluid to be sealed around a rotating shaft in rotating machinery. In recent years, it has been desired to reduce energy to be lost due to sliding in such a mechanical seal, for environmental countermeasures. For this reason, there are mechanical seals in which the sliding surfaces of the seal rings are provided with dynamic pressure generating grooves.

For example, a sliding surface of one sliding ring of a mechanical seal disclosed in Patent Citation 1 includes a circumferential groove and a spiral groove is formed on a radially inner side of the circumferential groove. One end of the spiral groove communicates with the circumferential groove. During the relative normal rotation of a pair of sliding rings, a fluid stored in the circumferential groove can be introduced into the spiral groove to generate a dynamic pressure at a closed end of the spiral groove. Accordingly, the sliding surfaces are slightly separated from each other, so that a frictional force to be generated during relative sliding is reduced.

### {CITATION LIST}

### {Patent Literature}

Patent Citation 1: WO2018/092742A (Page 13, FIG. 6)

### {SUMMARY OF INVENTION}

### {Technical Problem}

In the mechanical seal disclosed in Patent Citation 1, during the early stage of the relative normal rotation of the pair of sliding rings, that is, during low-speed rotation, a fluid stored in the circumferential groove can be introduced into the spiral groove to reliably generate a dynamic pressure. However, as the relative rotational speed of the pair of sliding rings is increased, the fluid is likely to flow along the circumferential groove in a circumferential direction. For this reason, there is a concern that the fluid is less likely to flow from the circumferential groove toward the spiral groove.

The present invention has been made in view of such a problem, and an object of the present invention is to provide a sliding component that can reliably introduce a fluid into a dynamic pressure generating groove.

### {Solution to Problem}

In order to solve the foregoing problem, a sliding component according to the present invention is a sliding component including a pair of sliding rings having sliding surfaces which are rotated relative to each other and which defines a radially outer space and a radially inner space, wherein at least one of the sliding surfaces is provided with a dynamic pressure generating groove that extends in a circumferential direction, and a deep groove which extends in the circumferential direction and of which a circumferential end portion on a relative rotation downstream side communicates with a relative rotation upstream end portion of the dynamic pressure generating groove. According to the feature of the present invention, since the movement of the fluid in the circumferential direction is regulated by the circumferential end portions of the deep grooves and the fluid is reliably introduced into the dynamic pressure generating grooves, a dynamic pressure can be effectively generated by the dynamic pressure generating grooves.

It may be preferable that a plurality of the dynamic pressure generation grooves are provided, the dynamic pressure generating grooves include a radially inner dynamic pressure generating groove and a radially outer dynamic pressure generating groove disposed closer to a radially outer side than the radially inner dynamic pressure generating groove, and a plurality of the deep grooves are provided, the deep grooves include a radially inner deep groove which is disposed closer to the radially outer side than the radially inner dynamic pressure generating groove and includes a circumferential end portion on a relative rotation downstream side in the circumferential direction and in which the circumferential end portion communicates with the relative rotation upstream end portion of the radially inner dynamic pressure generating groove, and a radially outer deep groove which is disposed closer to a radially inner side than the radially outer dynamic pressure generating groove and includes a circumferential end portion on a relative rotation downstream side in the circumferential direction and in which the circumferential end portion communicates with the relative rotation upstream end portion of the radially outer dynamic pressure generating groove. According to this preferable configuration, since the fluid is introduced from the radially inner deep groove into the radially inner dynamic pressure generating groove and the fluid is introduced from the radially outer deep groove into the radially outer dynamic pressure generating groove, the fluids are less likely to flow from the radially inner deep groove and the radially outer deep groove into a gap between the sliding surfaces, so that the respective fluids are less likely to be mixed.

It may be preferable that a side wall of the relative rotation upstream end portion of the dynamic pressure generating groove is directly connected to the circumferential end portion of the deep groove in a radial direction. According to this preferable configuration, the fluid can be smoothly and reliably supplied from the deep groove to the dynamic pressure generating groove.

It may be preferable that at least one of a relative rotation downstream end portion of the radially inner dynamic pressure generating groove and a relative rotation downstream end portion of the radially outer dynamic pressure generating groove is tapered toward a radially inner side or a radially outer side as viewed in an axial direction. According to this preferable configuration, since the fluid is discharged from the radially inner dynamic pressure generating groove to the radially inner side and the fluid is discharged from the radially outer dynamic pressure generating groove to the radially outer side, the interference between dynamic pressures generated by the radially inner dynamic pressure generating groove and the radially outer dynamic pressure generating groove can be suppressed.

It may be preferable that a pressure release groove extending in the circumferential direction is provided between the radially inner deep groove and the radially outer deep groove. According to this preferable configuration, since the fluid is recovered by the pressure release groove, the respective fluids are less likely to be mixed and the interference between dynamic pressures generated by the radially inner dynamic pressure generating groove and the radially outer dynamic pressure generating groove can be suppressed.

It may be preferable that a storage groove extending in the circumferential direction is provided on a circumferential extension of the deep groove. According to this preferable configuration, since the fluid is recovered by the storage groove, the respective fluids are less likely to be mixed.

It may be preferable that a relative rotation downstream end portion of the dynamic pressure generating groove is disposed between the deep grooves adjacent to each other in the circumferential direction. According to this preferable configuration, since the relative rotation downstream end portion of the dynamic pressure generating groove is disposed to be offset from the adjacent downstream deep groove in the circumferential direction, a dynamic pressure effect generated at the relative rotation downstream end portion can be improved.

It may be preferable that the at least one of the sliding surfaces is provided with a reverse dynamic pressure generating groove that extends to a side opposite to the dynamic pressure generating groove in the circumferential direction, the deep groove includes circumferential end portions communicating with relative rotation upstream end portions of the reverse dynamic pressure generating grooves. According to this preferable configuration, during normal rotation, a dynamic pressure is generated by the dynamic pressure generating groove and the fluid is recovered by the reverse dynamic pressure generating groove. During reverse rotation, a dynamic pressure is generated by the reverse dynamic pressure generating groove and the fluid is recovered by the dynamic pressure generating groove.

It may be preferable that the at least one of the sliding surfaces is provided with a dynamic pressure generating element that communicates with the radially outer space or the radially inner space. According to this preferable configuration, a lifting effect between the sliding surfaces can be improved to improve a lubricating property.

### {BRIEF DESCRIPTION OF DRAWINGS}

FIG. 1 is a longitudinal sectional view illustrating an example of a mechanical seal including a sliding component according to a first embodiment of the present invention.
FIG. 2 is a diagram illustrating a sliding surface of a stationary seal ring in the first embodiment as viewed in an axial direction.
FIG. 3 is an enlarged view of a main part of FIG. 2.
FIG. 4 is a diagram illustrating a sliding surface of the stationary seal ring as viewed in the axial direction when a rotating seal ring is rotated in a normal direction in the first embodiment.
FIG. 5 is a diagram illustrating the sliding surface of the stationary seal ring as viewed in the axial direction when the rotating seal ring is rotated in a reverse direction in the first embodiment.
FIG. 6 is a diagram illustrating a sliding surface of a stationary seal ring of a sliding component according to a second embodiment of the present invention as viewed in an axial direction.
FIG. 7 is a diagram illustrating a sliding surface of a stationary seal ring of a sliding component according to a third embodiment of the present invention as viewed in an axial direction.
FIG. 8 is a diagram illustrating a modified example of the sliding surface of the stationary seal ring in the first embodiment of the present invention.

### {DESCRIPTION OF EMBODIMENTS}

Modes for implementing a sliding component according to the present invention will be described on the basis of embodiments.

### {First embodiment}

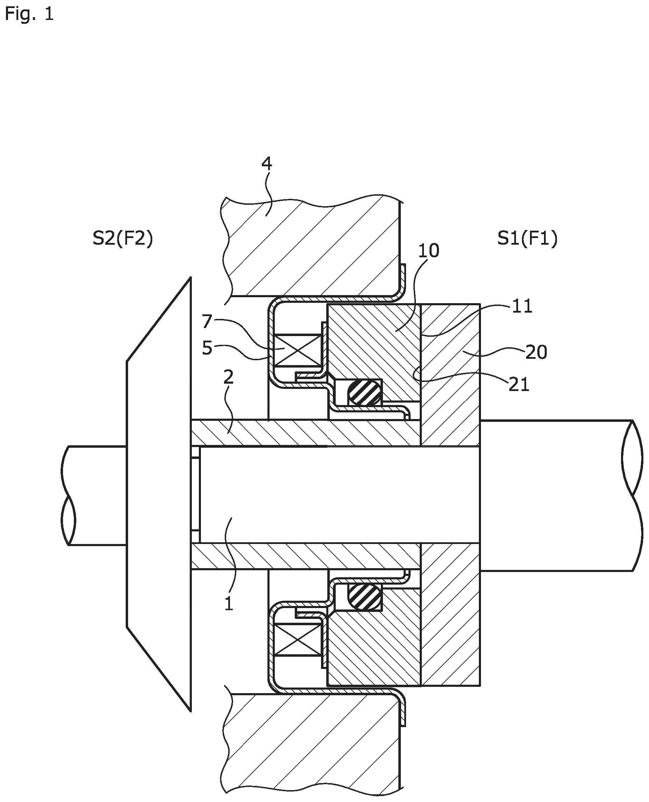

A sliding component according to a first embodiment of the present invention will be described with reference to FIGS. 1 to 5. In this embodiment, a mechanical seal will be described as an example of the sliding component. In the mechanical seal according to this embodiment, a first fluid F1, such as oil, is present in an outer space S1 as a radially outer space and a second fluid F2, such as water, is present in an inner space S2 as a radially inner space. For the convenience of description, in the drawings, dots may be added to grooves and the like formed on a sliding surface.

The mechanical seal illustrated in FIG. 1 is an inside-type seal for sealing the first fluid F1 that tends to leak from a radially outer side toward a radially inner side of the sliding surface. That is, an example in which the pressure of the first fluid F1 is higher than the pressure of the second fluid F2 will be described.

The mechanical seal mainly includes a stationary seal ring 10 and a rotating seal ring 20. The stationary seal ring 10 has an annular shape, and is provided on a seal cover 5 fixed to a housing 4 of a mounting target device in a nonrotating and axially movable state. The rotating seal ring 20 has an annular shape, and is provided on a rotating shaft 1 via a sleeve 2 in a state of being rotatable together with the rotating shaft 1. The stationary seal ring 10 is biased in an axial direction by an elastic member 7. A sliding surface 11 of the stationary seal ring 10 and a sliding surface 21 of the rotating seal ring 20 are adapted to slide in close contact with each other. Further, the sliding surface 21 of the rotating seal ring 20 is formed of a flat surface, and the flat surface is not provided with recessed portions such as grooves.

The stationary seal ring 10 and the rotating seal ring 20 are typically made of a combination of SiC (as an example of hard material) and SiC or a combination of SiC and carbon (as an example of soft material). However, sliding materials are not limited thereto, and any material used as the sliding materials for mechanical seals can be applied. Further, examples of SiC include sintered bodies that use boron, aluminum, carbon, and the like as sintering aids, and materials composed of two or more phases of which components and compositions are different from each other, such as SiC in which graphite particles are dispersed, reaction-sintered SiC composed of SiC and Si, SiC-TiC, and SiC-TiN. Carbon in which carbonaceous materials and graphitic materials are mixed with each other, resin-molded carbon, sintered carbon, and the like can be used as the carbon. Furthermore, metal materials, resin materials, surface-modified materials (e.g., coating materials), composite materials, and the like can also be applied in addition to the sliding materials described above.

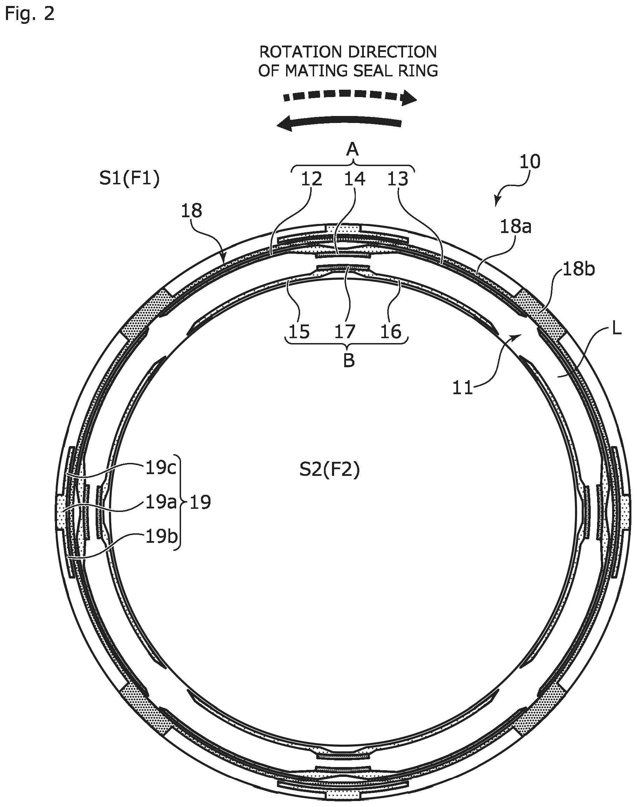

As illustrated in FIG. 2, the rotating seal ring 20 is adapted to slide relative to the stationary seal ring 10 counterclockwise as illustrated by a solid-line arrow or clockwise as illustrated by a broken-line arrow. Hereinafter, a direction of the solid-line arrow will be described as a normal rotation direction of the rotating seal ring 20, and a direction of the broken-line arrow will be described as a reverse rotation direction of the rotating seal ring 20.

The sliding surface 11 of the stationary seal ring 10 is provided with dynamic pressure generating mechanisms A, dynamic pressure generating mechanisms B, an annular groove 18, and dynamic pressure generating elements 19, and the other flat surface portion forms a land portion L.

A plurality of dynamic pressure generating mechanisms A and B (four each in this embodiment) are regularly arranged in a circumferential direction.

The dynamic pressure generating mechanism A includes a radially outer dynamic pressure generating groove 12, a radially outer reverse dynamic pressure generating groove 13, and a radially outer deep groove 14.

The dynamic pressure generating mechanism B includes a radially inner dynamic pressure generating groove 15, a radially inner reverse dynamic pressure generating groove 16, and a radially inner deep groove 17.

The annular groove 18 includes an annular portion 18a that is provided on a radially outer side of the dynamic pressure generating mechanism A, and communication portions 18b that communicate with the outer space S1 at a plurality of points (four in this embodiment) in a circumferential direction of the annular portion 18a. The communication portions 18b are arranged to be offset from the radially outer deep grooves 14 and the radially inner deep grooves 17 in the circumferential direction.

The plurality of (four in this embodiment) dynamic pressure generating elements 19 are formed in regions, each of which is surrounded by the annular portion 18a and two adjacent communication portions 18b. The dynamic pressure generating elements 19 are arranged at positions that overlap with the radially outer deep grooves 14 and the radially inner deep grooves 17 in a radial direction.

The dynamic pressure generating element 19 includes a radial groove 19a that communicates with the outer space S1, and Rayleigh steps 19b and 19c that extend from a radially inner end of the radial groove 19a to both sides in the circumferential direction. Further, the radial groove 19a is formed to have the same depth as the Rayleigh steps 19b and 19c, but may be formed to have a different depth.

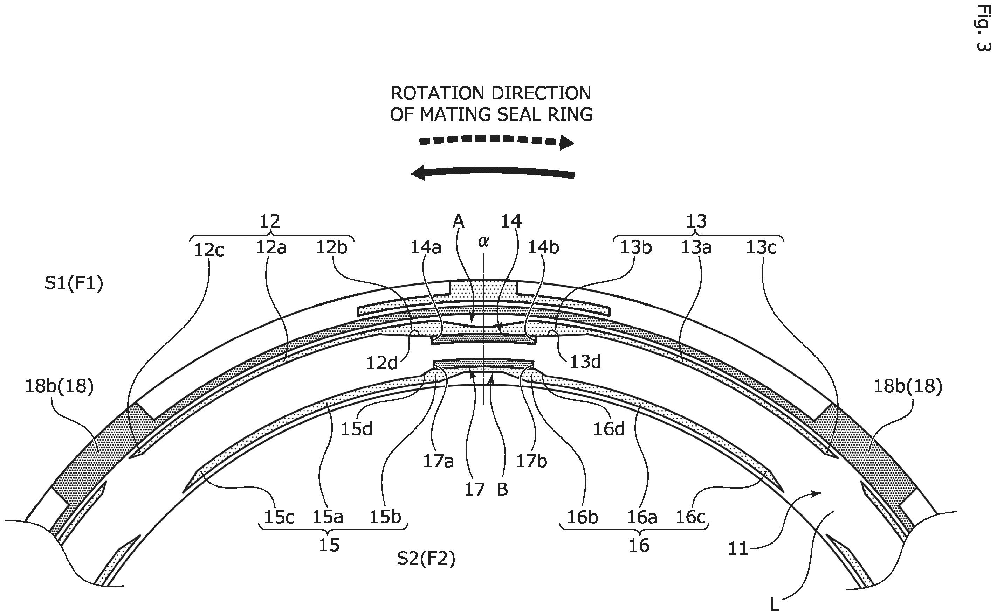

First, the dynamic pressure generating mechanism A will be described in detail. As illustrated in FIG. 3, the radially outer deep groove 14 has a substantially arc shape and extends substantially concentrically with the sliding surface 11. The radially outer dynamic pressure generating groove 12 and the radially outer reverse dynamic pressure generating groove 13 are provided closer to the radially outer side than the radially outer deep groove 14. The radially outer deep groove 14, the radially outer dynamic pressure generating groove 12, and the radially outer reverse dynamic pressure generating groove 13 are surrounded by the land portion L, and are isolated from the outer space S1 and the inner space S2.

Specifically, the radially outer dynamic pressure generating groove 12 includes a circumferential portion 12a, an inclined portion 12b, and an end portion 12c. The circumferential portion 12a is disposed closer to the radially outer side than the radially outer deep groove 14, and extends substantially concentrically with the sliding surface 11.

The end portion 12c is one end of the circumferential portion 12a, that is, a relative rotation downstream end portion of the circumferential portion 12a during normal rotation, and is tapered from the circumferential portion 12a toward the radially outer side as viewed in the axial direction. The end portion 12c is disposed closer to the radially inner side than the communication portion 18b of the annular groove 18.

The inclined portion 12b is the other end of the circumferential portion 12a, that is, a relative rotation upstream end portion of the circumferential portion 12a during the normal rotation, and extends toward the radially inner side while being inclined from the circumferential portion 12a toward a relative rotation upstream side.

The inclined portion 12b communicates with a radially outer side of the radially outer deep groove 14. In other words, the inclined portion 12b of the radially outer dynamic pressure generating groove 12 overlaps with the radially outer deep groove 14 in the radial direction. A radially inner side wall 12d of the inclined portion 12b is connected to a circumferential end portion 14a that is provided at one end of the radially outer deep groove 14.

The radially outer reverse dynamic pressure generating groove 13 includes a circumferential portion 13a, an inclined portion 13b, and an end portion 13c. The circumferential portion 13a is disposed closer to the radially outer side than the radially outer deep groove 14, and extends substantially concentrically with the sliding surface 11.

The end portion 13c is one end of the circumferential portion 13a, that is, a relative rotation upstream end portion of the circumferential portion 13a during the normal rotation, and is tapered from the circumferential portion 13a toward the radially outer side as viewed in the axial direction. The end portion 13c is disposed closer to the radially inner side than the communication portion 18b of the annular groove 18.

The inclined portion 13b is the other end of the circumferential portion 13a, that is, a relative rotation downstream end portion of the circumferential portion 13a during the normal rotation, and extends toward the radially inner side while being inclined from the circumferential portion 13a toward a relative rotation downstream side.

The inclined portion 13b communicates with the radially outer side of the radially outer deep groove 14. In other words, the inclined portion 13b of the radially outer reverse dynamic pressure generating groove 13 overlaps with the radially outer deep groove 14 in the radial direction. A radially inner side wall 13d of the inclined portion 13b is connected to a circumferential end portion 14b that is provided at the other end of the radially outer deep groove 14.

Further, the inclined portion 12b of the radially outer dynamic pressure generating groove 12 and the inclined portion 13b of the radially outer reverse dynamic pressure generating groove 13 communicate with each other in the circumferential direction.

The radially outer dynamic pressure generating groove 12 and the radially outer reverse dynamic pressure generating groove 13 are formed with the same depth, and are formed to be shallower than the radially outer deep groove 14.

The dynamic pressure generating mechanism A has a symmetrical shape with respect to a virtual line α that extends in the radial direction to pass through a middle portion of the radially outer deep groove 14 in the circumferential direction.

Next, the dynamic pressure generating mechanism B will be described. The radially inner deep groove 17 has a substantially arc shape and extends substantially concentrically with the sliding surface 11. The radially inner dynamic pressure generating groove 15 and the radially inner reverse dynamic pressure generating groove 16 are provided closer to the radially inner side than the radially inner deep groove 17. In other words, the radially inner dynamic pressure generating groove 15 and the radially inner reverse dynamic pressure generating groove 16 do not overlap with the radially outer dynamic pressure generating groove 12 and the radially outer reverse dynamic pressure generating groove 13 in the circumferential direction. The radially inner deep groove 17, the radially inner dynamic pressure generating groove 15, and the radially inner reverse dynamic pressure generating groove 16 are surrounded by the land portion L, and are isolated from the outer space S1 and the inner space S2.

Specifically, the radially inner dynamic pressure generating groove 15 includes a circumferential portion 15a, an inclined portion 15b, and an end portion 15c. The circumferential portion 15a is disposed closer to the radially inner side than the radially inner deep groove 17, and extends substantially concentrically with the sliding surface 11.

The end portion 15c is one end of the circumferential portion 15a, that is, a relative rotation downstream end portion of the circumferential portion 15a during the normal rotation, and is tapered from the circumferential portion 15a toward the radially inner side as viewed in the axial direction. The end portion 15c overlaps with the communication portion 18b of the annular groove 18 in the radial direction.

The inclined portion 15b is the other end of the circumferential portion 15a, that is, a relative rotation upstream end portion of the circumferential portion 15a during the normal rotation, and extends toward the radially outer side while being inclined from the circumferential portion 15a toward the relative rotation upstream side.

The inclined portion 15b communicates with a radially inner side of the radially inner deep groove 17. In other words, the inclined portion 15b of the radially inner dynamic pressure generating groove 15 overlaps with the radially inner deep groove 17 in the radial direction. A radially outer side wall 15d of the inclined portion 15b is connected to a circumferential end portion 17a that is provided at one end of the radially inner deep groove 17.

The radially inner reverse dynamic pressure generating groove 16 includes a circumferential portion 16a, an inclined portion 16b, and an end portion 16c. The circumferential portion 16a is disposed closer to the radially inner side than the radially inner deep groove 17, and extends substantially concentrically with the sliding surface 11.

The end portion 16c is one end of the circumferential portion 16a, that is, a relative rotation upstream end portion of the circumferential portion 16a during the normal rotation, and is tapered from the circumferential portion 16a toward the radially inner side as viewed in the axial direction. The end portion 16c overlaps with the communication portion 18b of the annular groove 18 in the radial direction.

The inclined portion 16b is the other end of the circumferential portion 16a, that is, a relative rotation downstream end portion of the circumferential portion 16a during the normal rotation, and extends toward the radially outer side while being inclined from the circumferential portion 16a toward the relative rotation downstream side.

The inclined portion 16b communicates with a radially inner side of the radially inner deep groove 17. In other words, the inclined portion 16b of the radially inner reverse dynamic pressure generating groove 16 overlaps with the radially inner deep groove 17 in the radial direction. A radially outer side wall 16d of the inclined portion 16b is connected to a circumferential end portion 17b that is provided at the other end of the radially inner deep groove 17.

Further, the inclined portion 15b of the radially inner dynamic pressure generating groove 15 and the inclined portion 16b of the radially inner reverse dynamic pressure generating groove 16 communicate with each other in the circumferential direction.

The radially inner dynamic pressure generating groove 15 and the radially inner reverse dynamic pressure generating groove 16 are formed with the same depth, and are formed to be shallower than the radially outer deep groove 14.

The dynamic pressure generating mechanism B has a symmetrical shape with respect to a virtual line α that extends in the radial direction to pass through a middle portion of the radially inner deep groove 17 in the circumferential direction.

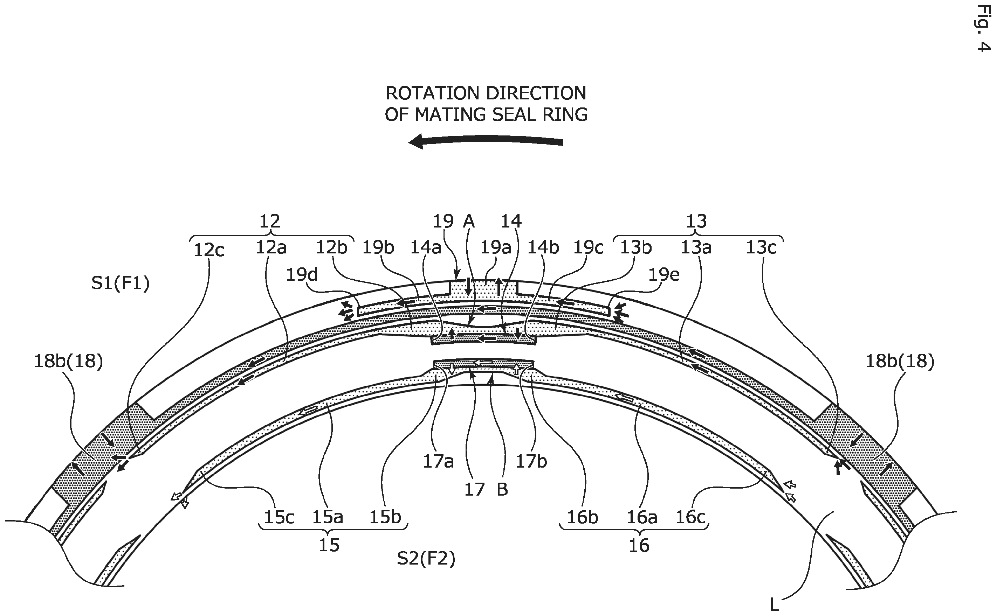

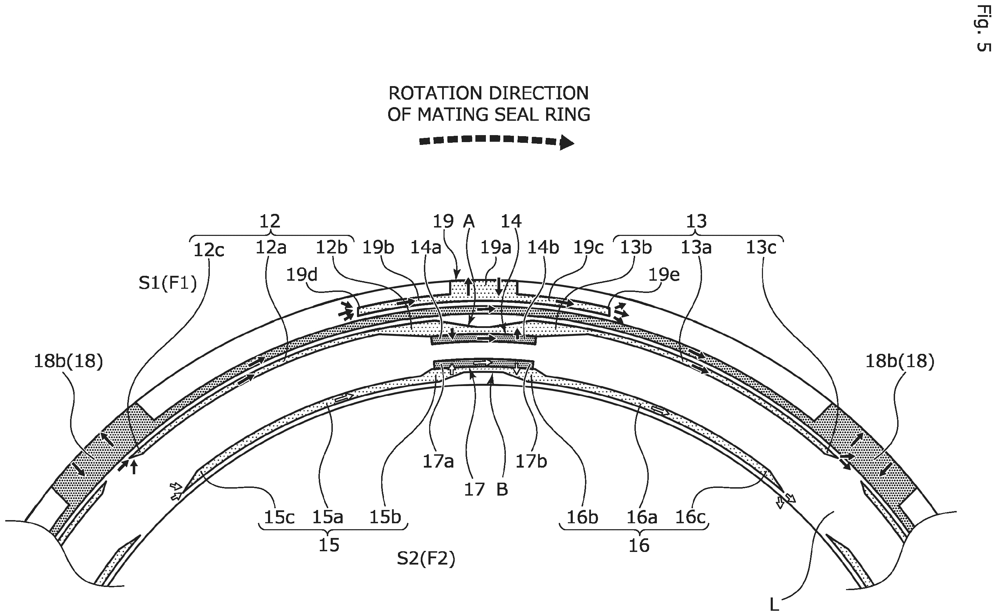

Next, the flows of the first fluid F1 and the second fluid F2 during the relative rotation of the stationary seal ring 10 and the rotating seal ring 20 will be schematically described with reference to FIGS. 4 and 5. Herein, the relative rotational speed of the stationary seal ring 10 and the rotating seal ring 20 will be described without being specified.

First, when the rotating seal ring 20 is not rotated and is stopped, the first fluid F1 flows into the dynamic pressure generating mechanisms A, the annular groove 18, and the dynamic pressure generating elements 19 close to the outer space S1 and the second fluid F2 flows into the dynamic pressure generating mechanisms B close to the inner space S2.

Since the sliding surfaces 11 and 21 are in contact with each other, the first fluid F1 and the second fluid F2 are hardly mixed between the sliding surfaces 11 and 21.

Next, a state in which the rotating seal ring 20 is rotated relative to the stationary seal ring 10 in a normal direction will be described.

When the rotating seal ring 20 is rotated relative to the stationary seal ring 10 in the normal direction as illustrated in FIG. 4, the first fluid F1 and the second fluid F2 are moved through each groove along the rotation direction of the stationary seal ring 10.

Specifically, in the dynamic pressure generating element 19, the first fluid F1 is moved to a closed end 19d of the Rayleigh step 19b and a positive pressure is generated at and in the vicinity of the closed end 19d. Since the sliding surfaces 11 and 21 are separated from each other by a force that is generated by the positive pressure generated at and in the vicinity of the closed end 19d of the Rayleigh step 19b, a lubricating property can be improved and wear between the sliding surfaces 11 and 21 can be suppressed.

Further, in an opposite Rayleigh step 19c, the first fluid F1 is moved from a closed end 19e to the radial groove 19a and a relative negative pressure is generated at and in the vicinity of the closed end 19e. Accordingly, the first fluid F1 present around the closed end 19e is sucked in due to the relative negative pressure generated at and in the vicinity of the closed end 19e of the Rayleigh step 19c. The relative negative pressure used herein refers not to a vacuum state but to a state in which a pressure is lower than a surrounding pressure.

The first fluid F1, which flows out from the closed end 19d of the Rayleigh step 19b to a gap between the sliding surfaces 11 and 21, is recovered by the annular groove 18 and returned to the outer space S1.

In the dynamic pressure generating mechanism A, a positive pressure is generated at and in the vicinity of the end portion 12c of the radially outer dynamic pressure generating groove 12 and a relative negative pressure is generated at and in the vicinity of the end portion 13c of the radially outer reverse dynamic pressure generating groove 13.

In detail, the first fluid F1 is supplied to the radially outer dynamic pressure generating groove 12 through a communication portion between the radially outer deep groove 14 and the radially outer reverse dynamic pressure generating groove 13. The movement of the first fluid F1, which flows through the radially outer deep groove 14, to the relative rotation downstream side is regulated by the circumferential end portion 14a that is provided on the relative rotation downstream side of the radially outer deep groove 14, and the first fluid F1 is guided toward the inclined portion 12b of the radially outer dynamic pressure generating groove 12 communicating in the radial direction. Accordingly, since the first fluid F1 is reliably introduced into the radially outer dynamic pressure generating groove 12, a dynamic pressure can be effectively generated at and in the vicinity of the end portion 12c of the radially outer dynamic pressure generating groove 12.

Further, since a large amount of first fluid F1 is stored in the radially outer deep groove 14, a sufficient amount of first fluid F1 can be supplied to the radially outer dynamic pressure generating groove 12 from the time of a low relative rotational speed over the time of a high relative rotational speed. As a result, poor lubrication is prevented.

Furthermore, since a relative negative pressure is generated at and in the vicinity of the end portion 13c of the radially outer reverse dynamic pressure generating groove 13, the first fluid F1 present at and in the vicinity of the end portion 13c can be recovered. The recovered first fluid F1 is supplied to the radially outer deep groove 14 or the radially outer dynamic pressure generating groove 12.

In the dynamic pressure generating mechanism B, a positive pressure is generated at and in the vicinity of the end portion 15c of the radially inner dynamic pressure generating groove 15 and a relative negative pressure is generated at and in the vicinity of the end portion 16c of the radially inner reverse dynamic pressure generating groove 16.

In detail, the second fluid F2 is supplied to the radially inner dynamic pressure generating groove 15 through a communication portion between the radially inner deep groove 17 and the radially inner reverse dynamic pressure generating groove 16. The movement of the second fluid F2, which flows through the radially inner deep groove 17, to the relative rotation downstream side is regulated by the circumferential end portion 17a that is provided on the relative rotation downstream side of the radially inner deep groove 17, and the second fluid F2 is guided toward the inclined portion 15b of the radially inner dynamic pressure generating groove 15 communicating in the radial direction. Accordingly, since the second fluid F2 is reliably introduced into the radially inner dynamic pressure generating groove 15, a dynamic pressure can be effectively generated at and in the vicinity of the end portion 15c of the radially inner dynamic pressure generating groove 15.

Further, since a large amount of second fluid F2 is stored in the radially inner deep groove 17, a sufficient amount of second fluid F2 can be supplied to the radially inner dynamic pressure generating groove 15 from the time of a low relative rotational speed over the time of a high relative rotational speed. As a result, poor lubrication is prevented.

Furthermore, since a relative negative pressure is generated at and in the vicinity of the end portion 16c of the radially inner reverse dynamic pressure generating groove 16, the second fluid F2 present at and in the vicinity of the end portion 16c can be recovered. The recovered second fluid F2 is supplied to the radially inner deep groove 17 or the radially inner dynamic pressure generating groove 15.

Next, a state in which the rotating seal ring 20 is rotated relative to the stationary seal ring 10 in a reverse direction will be described.

When the rotating seal ring 20 is rotated relative to the stationary seal ring 10 in the reverse direction as illustrated in FIG. 5, the first fluid F1 and the second fluid F2 are moved through each groove along the rotation direction of the stationary seal ring 10.

Specifically, in the dynamic pressure generating element 19, a positive pressure is generated at and in the vicinity of the closed end 19e of the Rayleigh step 19c and a relative negative pressure is generated at and in the vicinity of the closed end 19d of the opposite Rayleigh step 19b.

Since the sliding surfaces 11 and 21 are separated from each other by the positive pressure generated at and in the vicinity of the closed end 19e, a lubricating property can be improved and wear between the sliding surfaces 11 and 21 can be suppressed. Further, the first fluid F1 present around the closed end 19d is sucked in due to the relative negative pressure generated at and in the vicinity of the closed end 19d.

The first fluid F1, which flows out from the closed end 19d of the Rayleigh step 19b and the vicinity of the closed end 19d to the gap between the sliding surfaces 11 and 21, is recovered by the annular groove 18 and returned to the outer space S1.

In the dynamic pressure generating mechanism A, a positive pressure is generated at and in the vicinity of the end portion 13c of the radially outer reverse dynamic pressure generating groove 13 and a relative negative pressure is generated at and in the vicinity of the end portion 12c of the radially outer dynamic pressure generating groove 12.

The movement of the first fluid F1, which flows through the radially outer deep groove 14, to the relative rotation downstream side is regulated by the circumferential end portion 14b that is provided on the relative rotation downstream side of the radially outer deep groove 14, and the first fluid F1 is guided toward the inclined portion 13b of the radially outer reverse dynamic pressure generating groove 13 communicating in the radial direction. Accordingly, since the first fluid F1 is reliably introduced into the radially outer reverse dynamic pressure generating groove 13, a dynamic pressure can be effectively generated at and in the vicinity of the end portion 13c of the radially outer reverse dynamic pressure generating groove 13.

Further, since a large amount of first fluid F1 is stored in the radially outer deep groove 14, a sufficient amount of first fluid F1 can be supplied to the radially outer reverse dynamic pressure generating groove 13 from the time of a low relative rotational speed over the time of a high relative rotational speed. As a result, poor lubrication is prevented.

Furthermore, since a relative negative pressure is generated at and in the vicinity of the end portion 12c of the radially outer dynamic pressure generating groove 12, the first fluid F1 present at and in the vicinity of the end portion 12c can be recovered. The recovered first fluid F1 is supplied to the radially outer deep groove 14 or the radially outer reverse dynamic pressure generating groove 13.

In the dynamic pressure generating mechanism B, a positive pressure is generated at and in the vicinity of the end portion 16c of the radially inner reverse dynamic pressure generating groove 16 and a relative negative pressure is generated at and in the vicinity of the end portion 15c of the radially inner dynamic pressure generating groove 15.

The movement of the second fluid F2, which flows through the radially inner deep groove 17, to the relative rotation downstream side is regulated by the circumferential end portion 17b that is provided on the relative rotation downstream side of the radially inner deep groove 17, and the second fluid F2 is guided toward the inclined portion 16b of the radially inner reverse dynamic pressure generating groove 16 communicating in the radial direction. Accordingly, since the second fluid F2 is reliably introduced into the radially inner reverse dynamic pressure generating groove 16, a dynamic pressure can be effectively generated at and in the vicinity of the end portion 16c of the radially inner reverse dynamic pressure generating groove 16.

Further, since a large amount of second fluid F2 is stored in the radially inner deep groove 17, a sufficient amount of second fluid F2 can be supplied to the radially inner reverse dynamic pressure generating groove 16 from the time of a low relative rotational speed over the time of a high relative rotational speed. As a result, poor lubrication is prevented.

Furthermore, since a relative negative pressure is generated at and in the vicinity of the end portion 15c of the radially inner dynamic pressure generating groove 15, the second fluid F2 present at and in the vicinity of the end portion 15c can be recovered. The recovered second fluid F2 is supplied to the radially inner deep groove 17 or the radially inner reverse dynamic pressure generating groove 16.

As described above, during the normal rotation, the movement of the first fluid F1 to the relative rotation downstream side is regulated by the circumferential end portion 14a of the radially outer deep groove 14. Accordingly, since the first fluid F1 is reliably introduced into the radially outer dynamic pressure generating groove 12 that includes the radially inner side wall 12d connected to the circumferential end portion 14a of the radially outer deep groove 14, a dynamic pressure can be effectively generated at the end portion 12c of the radially outer dynamic pressure generating groove 12.

The sliding surface 11 includes the dynamic pressure generating mechanisms A provided on the radially outer side and the dynamic pressure generating mechanisms B provided on the radially inner side. According to this, since the first fluid F1 is introduced from the radially outer deep groove 14 into the radially outer dynamic pressure generating groove 12 and the second fluid F2 is introduced from the radially inner deep groove 17 into the radially inner dynamic pressure generating groove 15, the first fluid F1 and the second fluid F2 are less likely to leak from the radially outer deep groove 14 and the radially inner deep groove 17 to the gap between the sliding surfaces 11 and 21. As a result, the respective fluids are less likely to be mixed.

Further, the radially outer dynamic pressure generating groove 12 is disposed closer to the radially outer side than the radially outer deep groove 14, and the radially inner dynamic pressure generating groove 15 is disposed closer to the radially inner side than the radially inner deep groove 17. Since the fluid flowing out from the radially outer dynamic pressure generating groove 12 to the gap between the sliding surfaces 11 and 21 is recovered by the radially outer deep groove 14 and the fluid flowing out from the radially inner dynamic pressure generating groove 15 to the gap between the sliding surfaces 11 and 21 is recovered by the radially inner deep groove 17, the respective fluids are less likely to be mixed.

Furthermore, since the radially outer deep groove 14 and the radially inner deep groove 17 can be made close to each other in the radial direction, a lubricating property can be improved in a wide range in the radial direction.

Further, the end portion 12c of the radially outer dynamic pressure generating groove 12 is tapered toward the radially outer side as viewed in the axial direction, and the end portion 15c of the radially inner dynamic pressure generating groove 15 is tapered toward the radially inner side as viewed in the axial direction. According to this, since the respective fluids are discharged in directions away from the end portion 12c of the radially outer dynamic pressure generating groove 12 and the end portion 15c of the radially inner dynamic pressure generating groove 15 in the radial direction, the respective fluids are less likely to be mixed and the interference between dynamic pressures generated by the radially outer dynamic pressure generating groove 12 and the radially inner dynamic pressure generating groove 15 can be suppressed.

Furthermore, one radially outer dynamic pressure generating groove 12 communicates with one radially outer deep groove 14, and one radially inner dynamic pressure generating groove 15 communicates with one radially inner deep groove 17. According to this, since the fluids are concentrated on and introduced into the radially outer dynamic pressure generating groove 12 and the radially inner dynamic pressure generating groove 15 as compared with a case where a plurality of dynamic pressure generating grooves communicate with one deep groove, a dynamic pressure effect is high.

Further, since the end portions 12c of the radially outer dynamic pressure generating grooves 12 and the end portions 15c of the radially inner dynamic pressure generating grooves 15 are arranged to be offset from the radially outer deep grooves 14 and the radially inner deep grooves 17 in the circumferential direction and grooves are not formed around the end portions 12c and 15c, a dynamic pressure effect generated at the end portions 12c and 15c can be improved.

Furthermore, the radially outer reverse dynamic pressure generating groove 13 extending to a side opposite to the radially outer dynamic pressure generating groove 12 in the circumferential direction is provided, and the first fluid F1 is guided to the radially outer reverse dynamic pressure generating groove 13 by the circumferential end portion 14b of the radially outer deep groove 14 during reverse rotation. During the normal rotation, a dynamic pressure is generated by the radially outer dynamic pressure generating groove 12 and the first fluid F1 can be recovered by the radially outer reverse dynamic pressure generating groove 13. During the reverse rotation, a dynamic pressure is generated by the radially outer reverse dynamic pressure generating groove 13 and the first fluid F1 can be recovered by the radially outer dynamic pressure generating groove 12.

Moreover, since the dynamic pressure generating elements 19 communicating with the outer space S1 are provided, a lifting effect between the sliding surfaces 11 and 21 can be improved. As a result, a lubricating property can be improved.

Further, the radially inner dynamic pressure generating groove 15 and the radially inner reverse dynamic pressure generating groove 16 do not overlap with the radially outer dynamic pressure generating groove 12 and the radially outer reverse dynamic pressure generating groove 13 in the circumferential direction. In other words, since the radially inner dynamic pressure generating groove 15 and the radially inner reverse dynamic pressure generating groove 16 are separated from the radially outer dynamic pressure generating groove 12 and the radially outer reverse dynamic pressure generating groove 13 in the radial direction, respectively, the respective fluids are less likely to be mixed.

An aspect in which the radially inner side wall of the inclined portion 12b is connected to the circumferential end portion 14a of the radially outer deep groove 14 and the radially outer side wall of the inclined portion 15b is connected to the circumferential end portion 17a of the radially inner deep groove 17 has been exemplified in this embodiment, but the circumferential end portion of the deep groove may be disposed closer to the relative rotation downstream side or the relative rotation upstream side than the relative rotation upstream end portion of the dynamic pressure generating groove. Even in this case, since the movement of the fluid in the circumferential direction is regulated by the circumferential end portion of the deep groove, the fluid is reliably introduced into the dynamic pressure generating groove.

Further, the radially outer deep groove 14 and the radially inner deep groove 17 are not limited to an arc shape, and may extend in a linear shape or another curved shape such as a wavy shape.

Furthermore, a radially outer deep groove and a radially inner deep groove may be formed to be longer than those of this embodiment in the circumferential direction, but it is preferable that the radially outer deep groove and the radially inner deep groove are shorter than the radially outer dynamic pressure generating groove and the radially inner dynamic pressure generating groove so as not to overlap with the respective relative rotation downstream end portions of the radially outer dynamic pressure generating groove and the radially inner dynamic pressure generating groove in the radial direction.

### {Second embodiment}

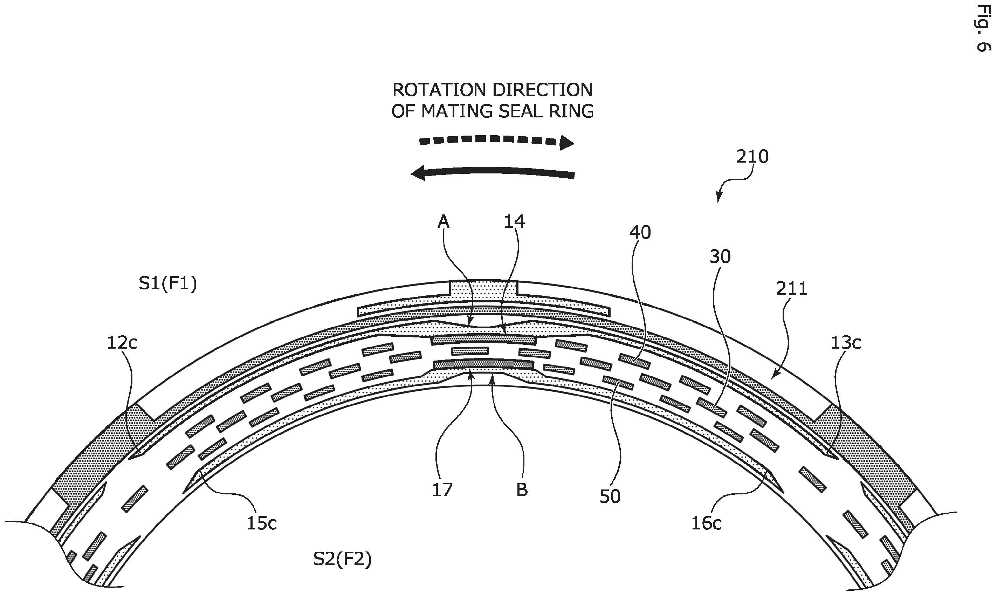

Next, a sliding component according to a second embodiment of the present invention will be described with reference to FIG. 6. The repeated description of components of the second embodiment, which are the same as those of the first embodiment, will be omitted.

As illustrated in FIG. 6, a plurality of recovery grooves 30 as pressure release grooves are arranged in a circumferential direction between dynamic pressure generating mechanisms A and B, which are separated from each other in a radial direction, on a sliding surface 211 of a stationary seal ring 210 of the second embodiment. The recovery grooves 30 have a substantially arc shape extending in the circumferential direction, and are deeper than respective dynamic pressure generating grooves of the dynamic pressure generating mechanisms A and B. These recovery grooves 30 are separated from each other in the circumferential direction, and are arranged over substantially the entire circumference of the sliding surface 211.

Further, a plurality of arc-shaped grooves 40 as radially inner storage grooves and a plurality of arc-shaped grooves 50 as radially outer storage grooves are arranged to be separated from each other in the circumferential direction on substantially concentric circles corresponding to radially outer deep grooves 14 and radially inner deep grooves 17. The arc-shaped grooves 40 and 50 have substantially the same shape as the recovery groove 30. Furthermore, the arc-shaped grooves 40 and 50 are arranged to be offset from the recovery grooves 30 in the circumferential direction.

The arc-shaped grooves 40 and 50 are not provided around end portions 12c and 13c of the dynamic pressure generating mechanisms A and end portions 15c and 16c of the dynamic pressure generating mechanisms B.

According to this, since the fluids are recovered by the recovery grooves 30 and the arc-shaped grooves 40 and 50, the respective fluids are less likely to be mixed and the interference between dynamic pressures generated by the dynamic pressure generating mechanisms A and B can be suppressed.

Further, since the arc-shaped grooves 40 and 50 are not provided around the end portions 12c and 13c of the dynamic pressure generating mechanisms A and the end portions 15c and 16c of the dynamic pressure generating mechanisms B, the arc-shaped grooves 40 and 50 do not affect a dynamic pressure effect.

An aspect in which the recovery grooves 30 are arranged on the sliding surface 211 in an annular broken-line shape as viewed in the axial direction has been exemplified in the second embodiment, but the recovery grooves 30 may be arranged in an annular shape continuous in the circumferential direction.

Further, the arc-shaped grooves 40 and 50 are not essential components, and these components may be omitted.

Furthermore, the arc-shaped grooves 40 and 50 may be arranged in an annular broken-line shape as viewed in the axial direction.

### {Third embodiment}

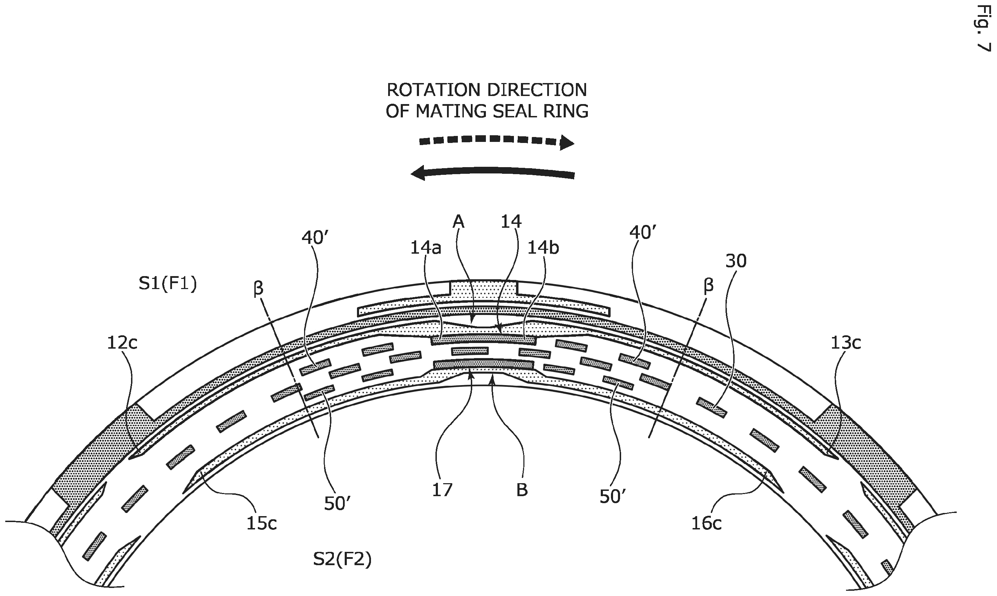

Next, a sliding component according to a third embodiment of the present invention will be described with reference to FIG. 7. The repeated description of components of the third embodiment, which are the same as those of the second embodiment, will be omitted.

As illustrated in FIG. 7, two arc-shaped grooves 40' of the third embodiment are provided on each of both sides of a radially outer deep groove 14 in a circumferential direction to be separated from each other in the circumferential direction. The arc-shaped grooves 40' and 40', which are farther from the radially outer deep groove 14 in the circumferential direction, are disposed closer to the radially outer deep groove 14 than virtual lines β that pass through intermediate positions between end portions 14a and 14b of the radially outer deep groove 14 and end portions 12c and 13c of a dynamic pressure generating mechanism A and extend in a radial direction.

Two arc-shaped grooves 50' of the third embodiment are provided on each of both sides of a radially inner deep groove 17 in the circumferential direction to be separated from each other in the circumferential direction. The arc-shaped grooves 50' and 50', which are farther from the radially inner deep groove 17 in the circumferential direction, are disposed closer to the radially inner deep groove 17 than the virtual lines β.

According to this, since a sufficient land region can be formed around the end portions 12c and 13c of the dynamic pressure generating mechanisms A and the end portions 15c and 16c of the dynamic pressure generating mechanisms B, a dynamic pressure effect can be further improved as compared to the aspect of the second embodiment.

Although the embodiments of the present invention have been described above with reference to the drawings, the specific configuration is not limited to these embodiments and any modifications or additions without departing from the scope of the present invention are also included in the present invention.

For example, an aspect in which the dynamic pressure generating mechanisms A provided on the radially outer side and the dynamic pressure generating mechanisms B provided on the radially inner side are provided has been exemplified in the first to third embodiments, but only one type of dynamic pressure generating mechanisms may be provided.

Further, an aspect in which the plurality of dynamic pressure generating mechanisms A provided on the radially outer side and the plurality of dynamic pressure generating mechanisms B provided on the radially inner side are provided in the circumferential direction has been exemplified in the first to third embodiments, but at least one dynamic pressure generating mechanism may be provided in the circumferential direction instead of the plurality of dynamic pressure generating mechanisms.

Furthermore, the dynamic pressure generating mechanisms A and the dynamic pressure generating mechanisms B provided on the radially inner side are not limited to being arranged to overlap with each other in the radial direction, and may be arranged to be offset from each other in the circumferential direction.

Moreover, an aspect in which the radially outer dynamic pressure generating groove 12 and the radially outer reverse dynamic pressure generating groove 13 are arranged closer to the radially outer side than the radially outer deep groove 14 and the radially inner dynamic pressure generating groove 15 and the radially inner reverse dynamic pressure generating groove 16 are arranged closer to the radially inner side than the radially inner deep groove 17 has been exemplified in the first to third embodiments, but the arrangement of these grooves can be freely changed. For example, the radially outer dynamic pressure generating groove and the radially outer reverse dynamic pressure generating groove may be arranged closer to the radially inner side than the radially outer deep groove, and the radially inner dynamic pressure generating groove and the radially inner reverse dynamic pressure generating groove may be arranged closer to the radially outer side than the radially inner deep groove.

Further, an aspect in which one dynamic pressure generating groove communicates with one deep groove has been exemplified in the first to third embodiments, but a plurality of deep grooves may communicate with one dynamic pressure generating groove.

Furthermore, the dynamic pressure generating groove is not limited to communicating with the deep groove, and the relative rotation upstream end portion of the dynamic pressure generating groove may be disposed in the vicinity of the circumferential end portion of the deep groove without communicating with the deep groove. It is preferable that the relative rotation upstream end portion of the dynamic pressure generating groove overlaps with the deep groove in the radial direction.

Moreover, an aspect in which the relative rotation downstream end portion of the dynamic pressure generating groove is disposed between the deep grooves adjacent to each other in the circumferential direction has been exemplified in the first to third embodiments, but the deep groove of the dynamic pressure generating mechanism may overlap with the relative rotation downstream end portion of the dynamic pressure generating groove provided upstream of the dynamic pressure generating mechanism in the radial direction.

Further, the radially outer dynamic pressure generating groove, the radially outer reverse dynamic pressure generating groove, the radially inner dynamic pressure generating groove, and the radially inner reverse dynamic pressure generating groove are not limited to the shapes disclosed in the first to third embodiments, may be Rayleigh steps, spiral grooves, or the like, and may be freely modified. Furthermore, the shapes of end portions of the grooves can also be freely changed.

Furthermore, an aspect in which the dynamic pressure generating elements are provided on the radially outer side has been exemplified in the first to third embodiments, but the configuration of the dynamic pressure generating elements may be omitted or the dynamic pressure generating elements may be provided on the radially inner side or both sides in the radial direction. In addition, the number of dynamic pressure generating elements can be freely changed.

Further, an aspect in which the radially outer dynamic pressure generating mechanism and the radially inner dynamic pressure generating mechanism correspond to both-side rotation has been exemplified in the first to third embodiments, but the radially outer dynamic pressure generating mechanism and the radially inner dynamic pressure generating mechanism may correspond to only one-side rotation.

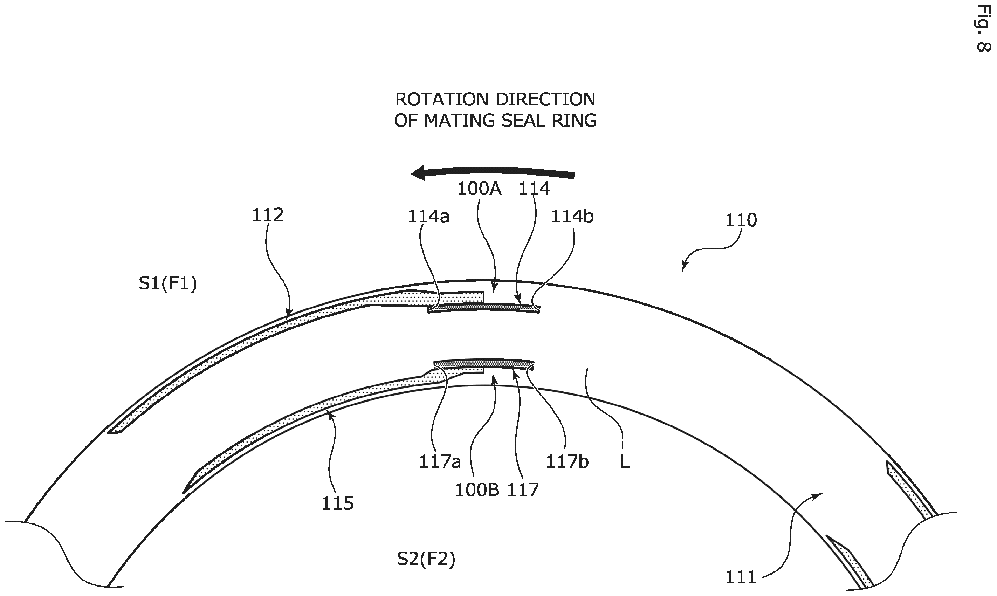

For example, the radially outer dynamic pressure generating mechanism and the radially inner dynamic pressure generating mechanism may be adapted to correspond to one-side rotation as illustrated in FIG. 8. A sliding surface 111 of a stationary seal ring 110 is provided with dynamic pressure generating mechanisms 100A and dynamic pressure generating mechanisms 100B.

The dynamic pressure generating mechanism 100A includes a radially outer dynamic pressure generating groove 112 and a radially outer deep groove 114. The radially outer dynamic pressure generating groove 112 communicates with the radially outer side of a circumferential end portion 114a that is provided on the relative rotation downstream side of the radially outer deep groove 114, and extends toward the relative rotation downstream side. A circumferential end portion 114b provided on the relative rotation upstream side of the radially outer deep groove 114 is surrounded by a land portion L, and is isolated from the outer space S1, the inner space S2, and the other grooves.

The dynamic pressure generating mechanism 100B includes a radially inner dynamic pressure generating groove 115 and a radially inner deep groove 117. The radially inner dynamic pressure generating groove 115 communicates with the radially inner side of a circumferential end portion 117a that is provided on the relative rotation downstream side of the radially inner deep groove 117, and extends toward the relative rotation downstream side. A circumferential end portion 117b provided on the relative rotation upstream side of the radially inner deep groove 117 is surrounded by the land portion L, and is isolated from the outer space S1, the inner space S2, and the other grooves.

Further, an aspect in which grooves such as pressure release grooves are not provided in the vicinity of an end portion of the dynamic pressure generating groove has been exemplified in the second and third embodiments, but grooves such as pressure release grooves may be provided in the vicinity of the end portion of the dynamic pressure generating groove.

Furthermore, a mechanical seal has been described as an example of the sliding component in the first to third embodiments, but the sliding component may be another mechanical seal for general industrial machinery, an automobile, a water pump, or the like. Moreover, the sliding component is not limited to the mechanical seal, and may be a sliding component other than a mechanical seal for a sliding bearing and the like.

### {REFERENCE SIGNS LIST}

- 1: Rotating shaft
- 4: Housing
- 10: Stationary seal ring
- 11: Sliding surface
- 12: Radially outer dynamic pressure generating groove
- 12c: End portion
- 13: Radially outer reverse dynamic pressure generating groove
- 13c: End portion
- 14: Radially outer deep groove
- 14a,: 14b Circumferential end portion
- 15: Radially inner dynamic pressure generating groove
- 15c: End portion
- 16: Radially inner reverse dynamic pressure generating groove
- 16c: End portion
- 17: Radially inner deep groove
- 17a, 17b: Circumferential end portion
- 19: Dynamic pressure generating element
- 20: Rotating seal ring
- 21: Sliding surface
- 30: Recovery groove (pressure release groove)
- 40: Radially outer arc-shaped groove (storage groove)
- 50: Radially inner arc-shaped groove (storage groove)
- 124a: Radial groove
- A, B: Dynamic pressure generating mechanism
- F1: First fluid
- F2: Second fluid
- S1: Outer space (radially outer space)
- S2: Inner space (radially inner space)

## Claims

1. A sliding component comprising a pair of sliding rings having sliding surfaces which are rotated relative to each other and which defines a radially outer space and a radially inner space,
wherein at least one of the sliding surfaces is provided with a dynamic pressure generating groove that extends in a circumferential direction, and a deep groove which extends in the circumferential direction and of which a circumferential end portion on a relative rotation downstream side communicates with a relative rotation upstream end portion of the dynamic pressure generating groove.

2. The sliding component according to claim 1,
wherein a plurality of the dynamic pressure generation grooves are provided, the dynamic pressure generating grooves include a radially inner dynamic pressure generating groove and a radially outer dynamic pressure generating groove disposed closer to a radially outer side than the radially inner dynamic pressure generating groove, and
a plurality of the deep grooves are provided,
the deep grooves include
a radially inner deep groove which is disposed closer to the radially outer side than the radially inner dynamic pressure generating groove and includes a circumferential end portion on a relative rotation downstream side in the circumferential direction and in which the circumferential end portion communicates with the relative rotation upstream end portion of the radially inner dynamic pressure generating groove, and
a radially outer deep groove which is disposed closer to a radially inner side than the radially outer dynamic pressure generating groove and includes a circumferential end portion on a relative rotation downstream side in the circumferential direction and in which the circumferential end portion communicates with the relative rotation upstream end portion of the radially outer dynamic pressure generating groove.

3. The sliding component according to claim 1,
wherein a side wall of the relative rotation upstream end portion of the dynamic pressure generating groove is directly connected to the circumferential end portion of the deep groove in a radial direction.

4. The sliding component according to claim 2,
wherein at least one of a relative rotation downstream end portion of the radially inner dynamic pressure generating groove and a relative rotation downstream end portion of the radially outer dynamic pressure generating groove is tapered toward a radially inner side or a radially outer side as viewed in an axial direction.

5. The sliding component according to claim 2,
wherein a pressure release groove extending in the circumferential direction is provided between the radially inner deep groove and the radially outer deep groove.

6. The sliding component according to claim 1,
wherein a storage groove extending in the circumferential direction is provided on a circumferential extension of the deep groove.

7. The sliding component according to claim 1,
wherein a relative rotation downstream end portion of the dynamic pressure generating groove is disposed between the deep grooves adjacent to each other in the circumferential direction.

8. The sliding component according to claim 1,
wherein the at least one of the sliding surfaces is provided with a reverse dynamic pressure generating groove that extends to a side opposite to the dynamic pressure generating groove in the circumferential direction,
the deep groove includes circumferential end portions communicating with relative rotation upstream end portions of the reverse dynamic pressure generating grooves.

9. The sliding component according to claim 1,
wherein the at least one of the sliding surfaces is provided with a dynamic pressure generating element that communicates with the radially outer space or the radially inner space.
